(19) Europäisches Patentamt / European Patent Office / Office européen des brevets

(11) **EP 2 533 341 A1**

(12) **EUROPEAN PATENT APPLICATION**
published in accordance with Art. 153(4) EPC

(43) Date of publication:
**12.12.2012 Bulletin 2012/50**

(51) Int Cl.:
*H01M 10/04* (2006.01)  *H01M 2/18* (2006.01)
*H01M 10/0585* (2010.01)

(21) Application number: **11739683.8**

(22) Date of filing: **28.01.2011**

(86) International application number:
**PCT/JP2011/051745**

(87) International publication number:
**WO 2011/096334 (11.08.2011 Gazette 2011/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.02.2010 JP 2010023664**

(71) Applicant: **NEC Energy Devices, Ltd.**
**Chuo-ku**
**Sagamihara-shi**
**Kanagawa 252-5298 (JP)**

(72) Inventor: **KOJIMA, Ikuo**
**Sagamihara-shi**
**Kanagawa 252-5298 (JP)**

(74) Representative: **Vossius & Partner**
**Siebertstrasse 4**
**81675 München (DE)**

(54) **LAMINATED SECONDARY BATTERY**

(57) The present invention aims at providing a laminated secondary battery in which no short circuit occurs even if an electrode sheet is not covered with an insulating resin. The present invention provides a laminated secondary battery in which positive electrode sheet 21 and a negative electrode sheet are stacked one on the other to face each other with separator 26 interposed therebetween, in which positive electrode sheet 21 or negative electrode sheet or both positive electrode sheet 21 and negative electrode sheet has/have fusion bonded portions 24 fused at intervals along a periphery of positive electrode sheet 21 or the negative electrode sheet, fusion seal portion 25 continuously fused along an inner periphery or an outer periphery of fusion bonded portions 24 or between adjacent fusion bonded portions 24, and separator protrusion portion 28, and the length (L1) of separator protrusion portion 28 satisfies the formula: $L1 \geq L2 \times C$, wherein L2 denotes the dimension of separator 26 in the longitudinal direction except for the length of separator protrusion portion 28, and C denotes the heat shrinkage factor of separator 26 in the longitudinal direction.

Fig.3

EP 2 533 341 A1

**Description**

Technical Field

The present invention relates to a laminated secondary battery.

Background Art

Recent portable terminals such as cellular phones and notebook computers have increasingly come to require batteries that are lighter in weight and that have higher capacities, and laminated secondary batteries that contain the components such as the electrodes and in which electrolyte sealed with a highly deformable laminate film have become popular. The laminated secondary battery has an advantage that two or more batteries can be easily stacked one on another and connected in series with each other to form a battery pack or module, and therefore have increasingly come to be used in apparatuses that require high currents, such as motor-assisted bicycles, electric power tools and electric vehicles.

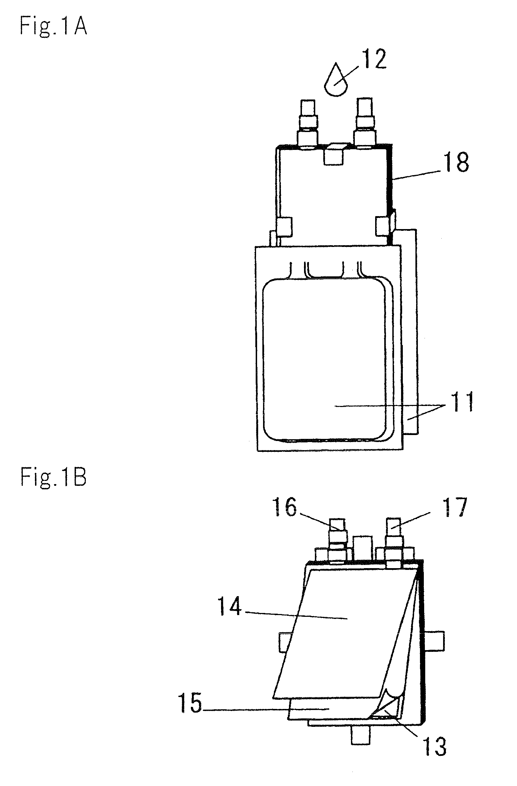

Figure 1A is a perspective view showing a configuration of a laminated secondary battery relating to the present invention. Figure 1B is a perspective view showing components of a laminate of the laminated secondary battery shown in Figure 1A.

Aluminum lead 16 is connected to a plurality of positive electrode sheets 13, and nickel lead 17 is connected to a plurality of negative electrode sheets 14. Laminate 18 comprising positive electrode sheets 13 and negative electrode sheets 14 stacked one on another with separators 15 interposed therebetween is sealed with electrolyte 12 within aluminum laminate film 11.

The separators electrically isolating the positive electrode sheets and the negative electrode sheets from each other are typically microporous films made of a resin such as polyethylene and polypropylene. The separators have a directivity in the transverse direction (abbreviated as TD hereinafter) of the film resin perpendicular to the machine direction (or the longitudinal direction, abbreviated as MD hereinafter) in which the film resin is drawn for removal during manufacture.

In Patent Literature 1 (JP3934888B), a laminated secondary battery comprising a positive electrode and a negative electrode face each other with a separator interposed therebetween. With the laminated secondary battery described in Patent Literature 1, the positive or negative electrode or both the positive or negative electrodes has/have both surfaces covered with separators, and the separators are bonded to each other at fusion bonded portions fused at intervals along the periphery of the positive or negative electrode. In addition, a fusion seal portion continuously fused is provided along the inner or outer periphery of the fusion bonded portions or between the spaces of the adjacent fusion bonded portions to seal the interior containing the positive or negative electrode from the outside of the separators.

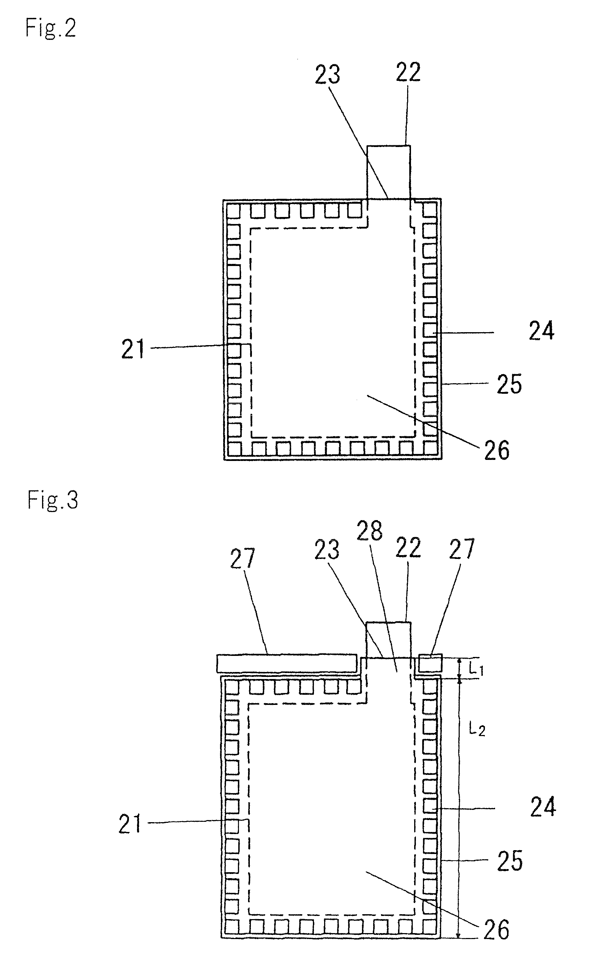

Figure 2 is a plan view of a separator bag relating to the present invention. The separator bag shown in Figure 2 contains a positive electrode sheet.

According to the secondary battery of Patent Literature 1, as shown in Figure 2, the preferred method is to have a positive electrode sheet 21 (or a negative electrode sheet) which extends leading terminal 22 in order to make a conductive connection, inserted between two separators 26, and to form these separators into a bag. The preferred separator bag is bonded to fusion bonded portions 24 that fuses at intervals along the periphery of positive electrode sheet 21 or negative electrode sheet, and the preferred separator bag has fusion seal portion 25 continuously fused along the outer periphery (or inner periphery) of fusion bonded portions 24.

The fusion seal portion is advantageous not only in that it prevents leakage of an active material peeling off the positive or negative electrode as described in Patent Literature 1 but also in that it prevents heat shrinkage of the separators.

Table 1 shows the tensile strength and the heat shrinkage factor of a common separator.

[Table 1]

|  |  | Separator A | Separator B |
|---|---|---|---|
| Tensile strength (kgf/mm$^2$) | TD | 1 | 18 |
|  | MD | 20.5 | 19.6 |
| Heat shrinkage factor (%) 105°C, 1h | TD | 0 | 0.5 |
|  | MD | 4 | 3 |

Separator A is a polypropylene-based, dry, uniaxially oriented separator, and separator B is a polyethylene-based, wet, biaxially oriented separator.

The separators are manufactured by stretching a resin such as polypropylene or polyethylene and therefore shrink at high temperature, and the shrinkage factor is 3 to 4 % under the condition that the separators are heated to 105 °C for one hour.

Patent Literature 2 (JP2007-258050A) describes a nonaqueous battery characterized in that an insulating resin layer made of a mixture of two or more resins is formed at least on an exposed part of a positive electrode collector facing the exposed part of a negative electrode collector with a separator interposed therebetween.

Citation List

Patent Literature

Patent Literature 1: JP3934888B
Patent Literature 2: JP2007-258050A

Summary of Invention

Technical Problem

However, in Patent Literature 1, the separator bag inevitably has electrode drawn-out portion 23 as shown in Figure 2. Fusion seal portion 25 cannot be provided at electrode drawn-out portion 23 because leading terminal 22 is drawn out of the electrode for charge collection at this portion. Accordingly, when electrode draw-out portion 23 is exposed to high temperature, it can shrink and cause a short circuit between the electrodes.

As means for preventing heat shrinkage of the electrode draw-out portion of the separator, Patent Literature 2 proposes a method of protecting a part that is expected to be exposed when heat shrink occurs with an insulating resin.

However, this method requires the insulating resin to cover an area of the separator that is wider than the area of the separator that actually shrinks and the insulating resin can also cover a part of the active material of the electrodes to lead to a loss of capacity.

That is, the technical problem to be solved by the present invention is to provide a laminated secondary battery in which a short circuit does not occur even if an electrode sheet is not covered with insulating resin.

Solution to Problem

A laminated secondary battery according to the present invention is a laminated secondary battery in which a positive electrode sheet and a negative electrode sheet are stacked one on the other to face each other with a separator interposed therebetween,

wherein said positive electrode sheet or said negative electrode sheet or both said positive electrode sheet and said negative electrode sheet has/have both surfaces covered with said separator,

said separator has fusion bonded portions fused at intervals along a periphery of said positive electrode sheet or said negative electrode sheet, a fusion seal portion continuously fused along an inner periphery or an outer periphery of said fusion bonded portions or between adjacent fusion bonded portions, and a separator protrusion portion, and

the length (L1) of the separator protrusion portion satisfies the formula:

$$L1 \geq L2 \times C$$

wherein L2 denotes the dimension of said separator in the longitudinal direction except for the length of the separator protrusion portion, and C denotes the heat shrinkage factor of said separator in the longitudinal direction.

Advantageous Effects of Invention

The present invention can provide a laminated secondary battery in which a short circuit does not occur even if an electrode sheet is not covered with an insulating resin.

Brief Description of Drawings

Figure 1A is a perspective view showing a configuration of a laminated secondary battery relating to the present invention.
Figure 1B is a perspective view showing components of a laminate of the laminated secondary battery shown in Figure 1A.
Figure 2 is a plan view of a conventional separator bag containing a positive electrode sheet.
Figure 3 is a plan view of a separator bag according to the present invention containing the positive electrode sheet.
Figure 4 is a plan view of another separator bag according to the present invention containing the positive electrode sheet.

Description of Embodiments

Best modes for carrying out the present invention will be described with reference to the drawings.
To solve the problem described above, according to the present invention, electrode draw-out portions of separators in which a fusion seal portion cannot be formed are previously formed to protrude by a length larger than the amount of shrinkage, and a positive electrode sheet and a negative electrode sheet are inserted between the separators and stacked one on the other.
When the separators shrink, collectors of the electrode sheets can be exposed, and a short circuit can occur. However, the fusion seal portion is not broken by heat, so that the electrode sheets are not exposed even if the separators shrink, and therefore, no short circuit occurs.
That is, the present invention can provide a highly safe laminated secondary battery in which even if a separator thermally shrinks, the separator protrusion portion that protrudes by a length larger than the amount of shrinkage prevents the collector of an electrode sheet from being exposed, and therefore no short circuit occurs between positive and negative electrodes.
Figure 3 is a plan view of a separator bag according to the present invention containing a positive electrode sheet.
Two separators 26 are formed into a bag, and positive electrode sheet 21 having leading terminal 22 is inserted into the bag. Two separators 26 are placed one on another, positive electrode sheet 21 is inserted between separators 26, fusion bonded portions 24 are provided along the entire periphery of separators 26 except for electrode draw-out portion 23, and continuous fusion seal portion 25 is provided along the outer periphery of fusion bonded portions 24.
Preferably, positive electrode sheet 21 (or a negative electrode sheet) is contained between two separators 26, which are formed into a bag, with leading terminal 22 for conductive connection drawn to the outside. Preferably, the separators that form the bag are bonded to each other at fusion bonded portions 24 fused at intervals along the periphery of positive electrode sheet 21 or negative electrode sheet and have fusion seal portion 25 continuously fused along the outer periphery (or inner periphery) of fusion bonded portions 24.
Fusion bonded portions 24 and fusion seal portion 25 along the side on which electrode draw-out portion 23 is formed, are formed at positions that retreat from the edge so that separator protrusion portion 28 is formed, and not-fused separator portion 27 is removed after fusion seal portion 25 is formed.
To prevent a short circuit, the sum of the lengths of the fusion bonded portion and the fusion seal portion and the length of the separator protrusion portion is preferably sufficiently larger than the amount of heat shrinkage of the separators that are used.
To prevent a short circuit, the length (L1) of the separator protrusion portion preferably satisfies the following formula (1).
$$L1 \geq L2 \times C + 1 \; (1)$$

In the formula (1), L1 denotes the length (mm) of separator protrusion portion 28, L2 denotes the dimension (mm) of separator 26 in the longitudinal direction, and C denotes the heat shrinkage factor (%) of separator 26 in the longitudinal direction.
The length of separator 26 does not include the length of separator protrusion portion 28. The product of length L2 of separator 26 and heat shrinkage factor C is the amount of shrinkage of separator 26. Although not essential for preventing a short circuit, in terms of safety, length L1 of the separator protrusion portion can include an extra 1 mm or more. In this case, the electrode sheet can be prevented from being exposed even if the separators shrink, and it is certain that a short circuit can be prevented.

The heat shrinkage factor of a film increases as the degree of stretching increases. A uniaxially oriented separator hardly shrinks in TD, while a biaxially oriented separator shrinks both in TD and MD.

The shrinkage factor increases as the service temperature increases and varies with the material. Accordingly, the shrinkage factor varies depending on the design such as the material and the degree of stretching of the separators that are used and the service temperature, and therefore a particular value of the heat shrinkage factor cannot be specified. If the service temperature is 130 °C at the most, the heat shrinkage factor at 130 °C can be used as C. If the length of the separator protrusion portion is larger than the amount of shrinkage of the separators at the service temperature, the formula (1) can be satisfied, and a short circuit can be prevented.

The separators are preferably made of resin and more preferably formed of a polypropylene-based or polyethylene-based porous film. The polypropylene-based or polyethylene-based resin film used in the present invention easily shrinks, while a nonwoven fabric used in a lead-acid battery does not shrink.

In the following, examples will be described in detail.

(Example 1)

A positive electrode sheet was fabricated. The positive electrode sheet has a leading terminal, and has a length of 100 mm and a width of 50 mm except for the leading terminal.

The separators that were used had a polyethylene monolayer structure having a TD breaking strength of 1000 kgf/cm$^2$, an MD breaking strength of 1000 kgf/cm$^2$ and a heat shrinkage factor in the longitudinal direction at 130 °C of 4.5 %.

As shown in Figure 3, two separators 26 having a length of 107 mm and a width of 54 mm were placed one on the other, positive electrode sheet 21 having a length of 100 mm and a width of 50 mm was inserted between two separators 26, fusion bonded portions 24 having a length of 2 mm and a width of 2 mm were formed along the entire periphery except for electrode drawn-out portion 23, and continuous fusion seal portion 25 was formed along the outer periphery of fusion bonded portions 24. That is, the sum of the length of fusion bonded portion 24 and the length of fusion seal portion 25 was 2 mm. Fusion bonded portions 24 and the part of fusion seal portion 25 along the side on which electrode drawn-out portion 23 was formed were formed at positions retreated by 3 mm from the edge so that separator protrusion portion 28 had a length of 3 mm, and not-fused separator portion 27 having a length of 3 mm was removed after fusion seal portion 25 was formed, thereby completing the separator bag. The effective length of the separator protrusion portion was 5 mm, which was the sum of the length of separator protrusion portion 28 and the lengths of fusion bonded portion 24 and fusion seal portion 25.

A negative electrode sheet was fabricated. The negative electrode sheet has leading terminal 22, and has a length of 100 mm and a width of 50 mm except for leading terminal 22.

Fourteen positive electrode sheets 21 contained in the separator bags fabricated in the method described above were prepared, fourteen positive electrode sheets 21 and fifteen negative electrode sheets having a length of 100 mm and a width of 50 mm were alternately stacked one on another, aligned with each other in the longitudinal direction and the lateral direction and secured together with a polypropylene tape to form a laminate.

(Example 2)

A laminate was formed in the same manner as in the example 1 except that two separators having a length of 108 mm and a width of 54 mm were placed one on the other, the fusion bonded portions and the part of the fusion seal portion, along the side on which the electrode draw-out portion was formed, were formed at positions that retreated by 4 mm from the edge so that the separator protrusion portion had a length of 4 mm, and the not-fused separator portion having a length of 4 mm was removed, after the fusion seal portion was formed, to complete the separator bag. The effective length of the separator protrusion portion was 6 mm, which was the sum of the length of the separator protrusion portion and the lengths of the fusion bonded portion and the fusion seal portion.

(Comparative Example 1)

With the related art, a laminate was formed as shown in Figure 2 in the same manner as in the example 1 except that the separator bag was formed by placing two separators having a length of 104 mm and a width of 54 mm one on the other, and the fusion bonded portions and the fusion seal portion along the side on which the electrode draw-out portion was formed were formed so that the separator protrusion portion was not formed. The effective length of the separator protrusion portion was 2 mm, which was the sum of the length of the separator protrusion portion and the lengths of the fusion bonded portion and the fusion seal portion.

(Comparative Example 2)

A laminate was formed in the same manner as in the example 1 except that two separators having a length of 105 mm and a width of 54 mm were placed one on the other, the fusion bonded portions and the fusion seal portion, along the side on which the electrode draw-out portion was formed, were formed at positions that retreated by 1 mm from the edge so that the separator protrusion portion having a length of 1 mm was formed, and the not-fused separator portion having a length of 1 mm was removed, after the fusion seal portion was formed, to complete the separator bag. The effective length of the separator protrusion portion was 3 mm, which was the sum of the length of the separator protrusion portion and the lengths of the fusion bonded portion and the fusion seal portion.

(Comparative Example 3)

A laminate was formed in the same manner as in the example 1 except that two separators having a length of 106 mm and a width of 54 mm were placed one on the other, the fusion bonded portions and the fusion seal portion, along the side on which the electrode draw-out portion was formed, were formed at positions that retreated by 2 mm from the edge so that the separator protrusion portion having a length of 2 mm was formed, and the not-fused separator portion having a length of 2 mm was removed, after the fusion seal portion was formed, to complete the separator bag. The effective length of the separator protrusion portion was 4 mm, which was the sum of the length of the separator protrusion portion and the lengths of the fusion bonded portion and the fusion seal portion.

(Example 3)

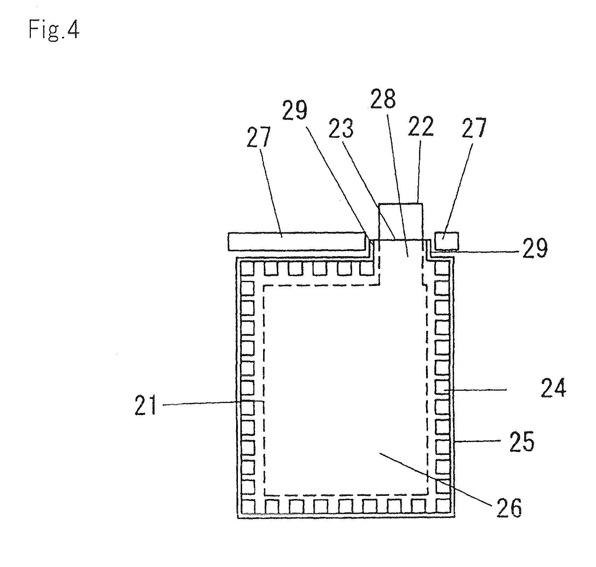

Figure 4 is a plan view of another separator bag according to the present invention containing a positive electrode sheet.

Two separators 26 were formed into a bag, and positive electrode sheet 21 with leading terminal 22 was inserted into the bag. Two separators 26 were placed one on the other, positive electrode sheet 21 was inserted between separators 26, fusion bonded portions 24 were formed along the entire periphery excluding electrode draw-out portion 23, and continuous fusion seal portion 25 was formed along the outer periphery of the fusion bonded portions.

Fusion bonded portions 24 and the part of fusion seal portion 25, along the side on which electrode draw-out portion 23 was formed, were formed at positions that retreated from the edge by the length of separator protrusion portion 28, and weld seal portions 29 continuously fused were formed along the longitudinal outer edges of separator protrusion portion 28. Not-fused separator portion 27 was removed after fusion seal portion 25 and weld seal portions 29 were formed.

A laminate was formed in the same manner as in comparative example 3 except that the two weld seal portions were formed along the longitudinal outer edges of the separator protrusion portion. The effective length of the separator protrusion portion was 4 mm, which was the sum of the length of the separator protrusion portion and the lengths of the fusion bonded portion and the fusion seal portion.

The laminate formed as described above was placed in a thermostat, and the temperature of the thermostat was raised to 130 ± 2 °C at a rate of 5 ± 2 °C/minute and kept at 30 ± 2 °C for 10 minutes. Then, the thermostat was allowed to sufficiently cool at room temperature, the laminate was checked for a short circuit between the positive electrodes and the negative electrodes, and then, the laminate was disassemble to measure the amount of shrinkage of the separators.

The tests were carried out under conditions complying with JISC 8712 relating to safety tests for lithium-ion secondary batteries.

Table 2 shows the amount of shrinkage of the separator left after being kept in a high temperature environment and in the presence or absence of a short circuit between electrodes after being kept in the high temperature environment.

[Table 2]

|  | separator | | Shrinkage of separator after being kept in high temperature (mm) | Presence or absence of short circuit after being kept in high temperature |
|---|---|---|---|---|
|  | Length of fusion bonded portion + fusion seal portion (mm) | Length of separator protrusion portion (mm) |  |  |
| Comparative example 1 | 2 | 0 | 4.1 | Presence |

(continued)

| | separator | | Shrinkage of separator after being kept in high temperature (mm) | Presence or absence of short circuit after being kept in high temperature |
|---|---|---|---|---|
| | Length of fusion bonded portion + fusion seal portion (mm) | Length of separator protrusion portion (mm) | | |
| Comparative example 2 | 2 | 1 | 4.3 | Presence |
| Comparative example 3 | 2 | 2 | 4.5 | Presence |
| Example 1 | 2 | 3 | 4.5 | Absence |
| Example 2 | 2 | 4 | 4.6 | Absence |
| Example 3 | 2 | 2 | 2.5 | Absence |

In the comparative example 1 using the related art, a positive electrode sheet facing a negative electrode was exposed, and a short circuit occurred between the electrodes. The effective length of the separator protrusion portion was the sum of the length of the separator protrusion portion and the length of the fusion bonded portion and fusion seal portion in Table 2. In comparative examples 2 and 3, a short circuit occurred, because the length of the separator protrusion portion was smaller than the amount of heat shrinkage of the separator.

In examples 1 and 2, the separators shrank, but not to the extent that the positive electrode sheets and the negative electrode sheets directly faced each other, so that no short circuit occurred.

In example 3, although the length of the separator protrusion portion was the same as that in the comparative example 3, the continuous weld seal portions formed along the longitudinal outer edges of the separator protrusion portion reduced the shrinkage, so that no short circuit occurred.

The same experiment as that described above was carried out with a separator bag formed without the fusion bonded portions and the fusion seal portion around the leading terminal. In the experiment, the amount of shrinkage of the separator was substantially the same as those shown in Table 2, and the presence or absence of a short circuit between electrodes was the same as those shown in Table 2.

In these examples, the effective length of the separator protrusion portion was the sum of the length of the separator protrusion portion and the length of the fusion bonded portion and fusion seal portion shown in Table 2. The length of the separator was 100 mm, and the heat shrinkage factor of the separator was 4.5 %.

Therefore, according to formula (1), a short circuit can be prevented if the (effective) length of the separator protrusion portion is equal to or larger than 5.5 mm (100 x 0.045 + 1). The results shown in Table 2 confirm this.

From the above description, it has been confirmed that it is possible to provide a laminated secondary battery in which no short circuit occurs even if the electrode sheets are not covered with an insulating resin.

Although embodiments have been described with regard to examples, the present invention is not limited to these examples and includes any modifications to the design without departing from the spirit of the present invention. Those skilled in the art can appreciate that the present invention includes various possible variations and modifications.

This application claims the priority of Japanese Patent Application No. 2010-23664 filed February 5, 2010, and incorporates the entire disclosure thereof.

Reference Signs List

11    aluminum laminate film
12    electrolyte
13, 21    positive electrode sheet
14    negative electrode sheet
15, 26    separator
16    aluminum lead
17    nickel lead
18    laminate
22    leading terminal

| 23 | electrode drawn-out portion |
| 24 | fusion bonded portion |
| 25 | fusion seal portion |
| 27 | not-fused separator portion |
| 28 | separator protrusion portion |
| 29 | weld seal portion |

**Claims**

1. A laminated secondary battery in which a positive electrode sheet and a negative electrode sheet are stacked one on the other to face each other with a separator interposed therebetween,
wherein said positive electrode sheet or said negative electrode sheet or both said positive electrode sheet and said negative electrode sheet has/have both surfaces covered with said separator,
said separator has fusion bonded portions fused at intervals along a periphery of said positive electrode sheet or said negative electrode sheet, a fusion seal portion continuously fused along an inner periphery or an outer periphery of said fusion bonded portions or between adjacent fusion bonded portions, and a separator protrusion portion, and the length (L1) of the separator protrusion portion satisfies the formula:

$$L1 \geq L2 \times C$$

wherein L2 denotes the dimension of said separator in the longitudinal direction except for the length of the separator protrusion portion, and C denotes the heat shrinkage factor of said separator in the longitudinal direction.

2. The laminated secondary battery according to claim 1, wherein the length (L1) of the separator protrusion portion satisfies the formula:

$$L1 \geq L2 \times C + 1$$

3. The laminated secondary battery according to claim 1 or 2, wherein the fusion seal portion is continuously extended to an outer longitudinal edge of the separator protrusion portion.

Fig.1A

Fig.1B

Fig.2

Fig.3

Fig.4

<table>
<tr><td colspan="2"><strong>INTERNATIONAL SEARCH REPORT</strong></td><td colspan="2">International application No.<br>PCT/JP2011/051745</td></tr>
</table>

**A. CLASSIFICATION OF SUBJECT MATTER**
*H01M10/04*(2006.01)i, *H01M2/18*(2006.01)i, *H01M10/0585*(2010.01)i

According to International Patent Classification (IPC) or to both national classification and IPC

**B. FIELDS SEARCHED**

Minimum documentation searched (classification system followed by classification symbols)
H01M10/04, H01M2/18, H01M10/0585

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 3934888 B2  (NEC Tokin Corp.),<br>20 June 2007 (20.06.2007),<br>entire text; fig. 1 to 4<br>(Family: none) | 1-3 |
| Y | JP 8-287944 A  (Shin-Kobe Electric Machinery Co., Ltd.),<br>01 November 1996 (01.11.1996),<br>paragraphs [0006] to [0017]; fig. 1 to 6<br>(Family: none) | 1-3 |
| Y | JP 2002-270239 A  (TDK Corp.),<br>20 September 2002 (20.09.2002),<br>paragraphs [0016] to [0021]; fig. 1 to 2<br>(Family: none) | 1-3 |

☒ Further documents are listed in the continuation of Box C.　　☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>21 April, 2011 (21.04.11) | Date of mailing of the international search report<br>10 May, 2011 (10.05.11) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2011/051745

C (Continuation).　DOCUMENTS CONSIDERED TO BE RELEVANT

| Category* | Citation of document, with indication, where appropriate, of the relevant passages | Relevant to claim No. |
|---|---|---|
| A | JP 2007-250319 A　(NEC Tokin Corp.),<br>27 September 2007 (27.09.2007),<br>(Family: none) | 1-3 |
| A | JP 2003-92100 A　(NEC Corp.),<br>28 March 2003 (28.03.2003),<br>(Family: none) | 1-3 |

Form PCT/ISA/210 (continuation of second sheet) (July 2009)

**REFERENCES CITED IN THE DESCRIPTION**

**Patent documents cited in the description**

- JP 3934888 B
- JP 2007258050 A
- JP 2010023664 A